# EUROPÄISCHE PATENTSCHRIFT

(11) **EP 2 119 109 B1**
(45) Veröffentlichungstag und Bekanntmachung des Hinweises auf die Patenterteilung: **19.01.2011**
(21) Anmeldenummer: 08708654.2
(22) Anmeldetag: 04.02.2008
(51) Int. Cl.: H04L 12/18, H04L 29/08

(54) **Verfahren und Vorrichtung zum Verteilen eines Datensegments eines Datenstroms an eine Gruppe von mehreren Nutzern**
Method and device for distributing a data segment of a data stream to a group of a plurality of users
Procédé et dispositif de distribution d'un segment de données d'un flux de données à un groupe de plusieurs utilisateurs

(30) Priorität: 14.02.2007 DE 102007007344
(43) Veröffentlichungstag der Anmeldung: 18.11.2009
(73) Patentinhaber: Siemens Aktiengesellschaft, 80333 München (DE)
(72) Erfinder: OERTEL, Norbert, 84032 Landshut (DE)
(74) Vertreter: Wolff, Harry
(86) Internationale Anmeldenummer: PCT/EP2008/051351
(87) Internationale Veröffentlichungsnummer: WO 2008/098853

(56) Entgegenhaltungen:
- US-A1- 2005 015 431
- US-A1- 2005 021 817

## Beschreibung

Die Erfindung betrifft ein Verfahren gemäß dem Anspruch 1, sowie einen Nutzer gemäß dem Anspruch 6 und ein System gemäß dem Anspruch 8.

Durch die Einführung der Digitalisierung und des Internets werden Daten wie beispielsweise Musikstücke oder Spielfilme in zunehmendem Masse digitalisiert über Verteilnetze, wie beispielsweise dem Internet, zu den jeweiligen Endkunden übertragen. Es existieren mehrere Lösungen, die zur Verteilung dieser Daten bzw. Datenströme, eingesetzt werden können.

So kann mit Hilfe einer zentralen Infrastruktur durch einen Broadcaster der Datenstrom an einen Multimediaserver geleitet werden, der über eine Netzanbindung zu den Endkunden verfügt und dafür zuständig ist, den Datenstrom an die Endkunden weiterzuleiten. Bei einer großen Anzahl an Endkunden kann dabei eine hierarchisch Verteilung mit Hilfe mehrerer Multimediaserver zum Einsatz kommen, um damit eine Last verteilen zu können und ein Core-Netzwerk nicht stark zu belasten. Eine derartige zentrale Infrastruktur zeigt den Nachteil, dass diese teuer im Aufbau und in der Wartung ist.

Ein weiterer Ansatz besteht darin, Overlaystrukturen mit und ohne Verteilbäume aufzubauen, die zumindest teilweise ohne eine zentrale Infrastruktur auskommen. Bekannt sind zum Beispiel Relayingverfahren über P2PNetze (P2P - Peer2Peer), wie z.B. Peer-Cast. Hierbei ist nachteilig, dass die Blätter der so aufgebauten Verteilbäume nicht weiter zum Broadcast, d.h. zum Verteilen des Datenstroms, beitragen. Die Blätter stellen hierbei reine Konsumenten dar. In einer Weiterentwicklung dieser Overlaystrukturen werden die Datenströme in Teilströme aufgespaltet, und eine Verteilung dieser Teilströme über Overlaystrukturen durchgeführt, wie beispielsweise in einem Verfahren mit einem Namen Splitstream [1].

Diese Erweiterung führt dazu, dass alle Knoten ein innerer Knoten in einem der Verteilbäume sein können und damit zur Gesamtverteilung Bandbreite beisteuern. Nachteilig hierbei ist jedoch ein Aufrechterhalten der Verteilbäume. Denn eine Komplexität und eine Fehleranfälligkeit sind wegen der dezentralen Verteilung der Baumstrukturen groß, wobei eine Reorganisation der Verteilbäume bei einem Ausfall aufwendig und ein Überbrücken von Ausfällen durch Fehlerschutz schwer durchführbar sind, da die Aufrechterhaltung an den einzelnen Verteilbäumen nicht zentral koordiniert wird.

US-2005/0021817-A offenbart ein bekanntes Verfahren zum Verteilen von Datenströmen an eine Gruppe von Nutzern.

Der Erfindung liegt somit die Aufgabe zugrunde ein Verfahren, einen Nutzer und ein System anzugeben, die ein Verteilen von Datensegmenten eines Datenstroms dezentral und mit einer geringen Belastung eines Verteilnetzwerks ermöglichen.

Diese Aufgabe wird ausgehend von den unabhängigen Ansprüchen gelöst. Sonstige Weiterbildungen der Erfindung sind in Unteransprüchen wiedergegeben.

Die Erfindung betrifft ein Verfahren zum Verteilen zumindest eines Datensegments zumindest eines Datenstroms an eine Gruppe mehrerer Nutzer in einem Netzwerk, mit folgenden Schritten:
- Versenden einer Statusnachricht durch einen Nutzer der Gruppe zu dem zumindest einen anderen Nutzer der Gruppe mittels eines Multicast- und/oder eines Broadcast-Kanals des Netzwerks, wobei diese Statusnachricht eine Information umfasst, die anzeigt, dass der sendende Nutzer zumindest ein zu empfangendes Datensegment des Datenstroms empfangen möchte;
- Empfangen von zumindest einer weiteren Statusnachricht des zumindest einen anderen.Nutzers der Gruppe durch den Nutzer über den Multicast- und/oder den Broadcast-Kanal, wobei diese Statusnachricht eine Information umfasst, die anzeigt, dass der sendende andere Nutzer zumindest ein zu empfangendes Datensegment des Datenstroms empfangen möchte;
- Empfangen des Datensegments durch den Nutzer über einen Punkt-zu-Punkt Übertragungskanal von einem Quellknoten;
- Ermitteln durch den Nutzer, ob zumindest einer der anderen Nutzers aufgrund seiner Statusnachricht dem Nutzer seinen Wunsch zum Empfangen des empfangenen Datensegments angezeigt hat;
- Versenden des Datensegments an den zumindest einen ermittelten anderen Nutzer mittels des Multicast- und/oder des Broadcast-Kanals;
- Empfangen des Datensegments durch den zumindest einen ermittelten anderen Nutzer über den Multicast- und/oder den Broadcast-Kanal.

Das Verfahren ermöglicht, dass die Gruppe von Nutzer dynamisch gebildet und verändert werden kann. Dabei kann auch bei fehlerhaft-funktionierenden Verbindungen innerhalb des Netzwerks und/oder bei fehlerhaft-funktionierenden Nutzern ein sicheres Verteilen des bzw. der Datensegmente gewährleistet werden. Ferner benötigt das Verfahren keine zentrale Verwaltung, so dass das Verfahren in einfacher Weise und kostengünstig aufgebaut werden kann. Des Weiteren kann das Verfahren in einem bestehenden Netzwerk auch dann eingesetzt werden, wenn nur ein Teil der Nutzer das Verfahren unterstützt, da das Verfahren autark zu anderen bestehenden Streaming- und/oder Downloadverfahren verwendbar ist.

Nach Empfang des gewünschten Datensegments durch einen der Nutzer der Gruppe überträgt dieser Nutzer den anderen Nutzern das empfangene gewünschte Datenpaket über den Multicast- und/oder Broadcast-Kanal. Hiermit wird das gewünschte Datensegment nur zweimal im Netzwerk der Nutzer übertragen, und zwar das erste Mal zum Empfangen durch den Nutzer und zum zweiten Mal zum Verteilen an die anderen Nutzer der Gruppe. Hierdurch kann ein Bandbreitenbedarf auf ein lediglich zweimaliges Übertragen des gewünschten Datensegments im Verteilnetzwerk, umfassend den Multicast- und/oder Broadcast-Kanal und den Punkt-zu-Punkt Übertragungskanal, begrenzt werden. Würde jeder der n-Nutzer das gewünschte Datensegment selbst bei dem Quellknoten anfragen, so würde das Datensegment n-Mal im Verteilnetzwerk übermittelt werden.

Wird der Nutzer vor einem Verschicken einer Aufforderungsnachricht an den Quellknoten zum Übersenden des Datensegments ein Vorhandensein des Datensegments aufgrund eines Empfangs über den Multicast- und/oder den Broadcast-Kanal überprüft und die Aufforderungsnachricht nur verschickt, falls die Überprüfung das Datensegment als fehlenden identifiziert, so kann ein Anfordern des Datensegments verhindert werden, wenn das Datensegment bereits bei dem Nutzer vorliegt. Hierdurch wird Bandbreite im Netzwerk eingespart. Zudem kann eine Latenzzeit zwischen Anfordern und Weiterverarbeiten des Datensegments reduziert werden, da eine Zeitverzögerung durch wiederholtes Übermitteln des Datensegments unterbunden wird.

Zudem kann die Übertragung eines über den Punkt-zu-Punkt Übertragungskanal empfangenen Datensegments mittels des Multicast- und/oder Broadcast-Kanals unterbunden werden, falls das empfangene Datensegment ebenfalls über den Multicast- und/oder Broadcast-Kanal empfangen wurde. Hierbei wird eine weitere Reduktion der benötigten Bandbreite im Multicast- und/oder Broadcast-Kanal erzielt, da das Datensegmente nur verschickt wird, die von anderen Nutzern der Gruppe noch nicht empfangen wurde.

Vorzugsweise wird das Versenden der Statusnachricht durch den jeweiligen Nutzer zu dem zumindest einen anderen Nutzer mittels des Multicast- und/oder des Broadcast-Kanals in für die Nutzer jeweils vorgebbarer Zeitintervalle durchgeführt. Hiermit wird gewährleistet, dass die Gruppe an Nutzern dynamisch auf Änderungen, wie in die Gruppe eintretende und aus der Gruppe austretende Nutzer, reagieren kann. Die Zeitintervalle können für jeden Nutzer vorgegeben und/oder zufällig gewählt werden. Aus [1] ist bspw. ein Algorithmus bekannt, der zur Berechnung des Zeitintervalls zwischen zwei aufeinander folgenden RTCP-Paketen (RTCP - RTP Control Protocol; RTP - Realtime transport protocol) dient. In einer vorzugsweisen Erweiterung wird die jeweilige Aufforderungsnachricht für den jeweiligen Nutzer aufgrund einer vorgebbaren oder zufällig ermittelbaren Zeitverzögerung verschickt. Diese Zeitverzögerung kann auch ausgehend von einem vorgebbaren Startzeitpunkt (STP) bestimmt werden. Hierdurch werden die jeweiligen Aufforderungsnachrichten der Nutzer zu unterschiedlichen Zeiten abgeschickt, wodurch erreicht werden kann, dass einer der Nutzer der Gruppe bereits das angefragte Datensegment erhalten hat und an die anderen Nutzer der Gruppe weiterleitet, bevor diese anderen Nutzer ihre jeweilige Aufforderungsnachricht absenden, d.h. bevor ihre Zeitverzögerung abgelaufen ist. Mit dieser Erweiterung wird der Bandbreitenbedarf im Netzwerk weiter reduziert. Ferner kann das Absenden der Aufforderungsnachricht unterdrückt werden, falls das angefragte Datensegment mittels des Multicast- und/oder des Broadcast-Kanals den anderen Nutzer erreicht hat.

Die Erfindung betrifft auch einen Nutzer in einem Netzwerk, wobei der Nutzer über folgende Mittel verfügt:
- Sendemittel zum Versenden einer Statusnachricht durch den zumindest einen Nutzer zu dem zumindest einen anderen Nutzer der Gruppe mittels eines Multicast- und/oder eines Broadcast-Kanals des Netzwerks, wobei diese Statusnachricht eine Information umfasst, die anzeigt, dass der sendende Nutzer zumindest ein zu empfangendes Datensegment des Datenstroms empfangen möchte, und zum Versenden des Datensegments an den zumindest einen ermittelten anderen Nutzer mittels des Multicast- und/oder des Broadcast-Kanals;
- Empfangsmittel zum Empfangen von zumindest einer weiteren Statusnachricht des zumindest einen anderen Nutzers der Gruppe durch den Nutzer über den Multicast- und/oder den Broadcast-Kanal, wobei diese Statusnachricht eine Information umfasst, die anzeigt, dass der sendende andere Nutzer zumindest ein zu empfangendes Datensegment des Datenstroms empfangen möchte und zum Empfangen des Datensegments durch den zumindest einen ermittelten anderen Nutzer über den Multicast- und/oder den Broadcast-Kanal;
- Auswahlmittel zum Ermitteln, ob zumindest einer der anderen Nutzer aufgrund seiner Statusnachricht dem Nutzer seinen Wunsch zum Empfangen des empfangenen Datensegments angezeigt hat.

Zudem kann der Nutzer ein weiteres Mittel umfassen, mit dem Erweiterungen des Verfahrens durchführbar sind.

Der Nutzer ist hiermit in der Lage das Verfahren auszuführen.

Zudem ist Teil der Erfindung ein System mit einer Gruppe von Nutzer und einem Quellknoten, bei dem der Quellknoten über ein Quellmittel verfügt, das derart ausgestaltet ist, dass es mit den jeweiligen Mitteln des zumindest einen Nutzers das Verfahren und optional seine Erweiterungen ausführt.

Die Erfindung und ihre Weiterbildung werden nachfolgend anhand von Zeichnungen näher erläutert. Es zeigen
- Figur 1: ein Netzwerk mit einer Gruppe von drei Nutzern, die das Verfahren zum Verteilen zumindest eines Daten- segments ausführen,
- Figur 2a, 2b: eine jeweilige Darstellung mit unterschiedlichen Zeitverzogerungen zur Stellung einer jeweiligen Aufforderungsnachricht an einen Quellknoten:

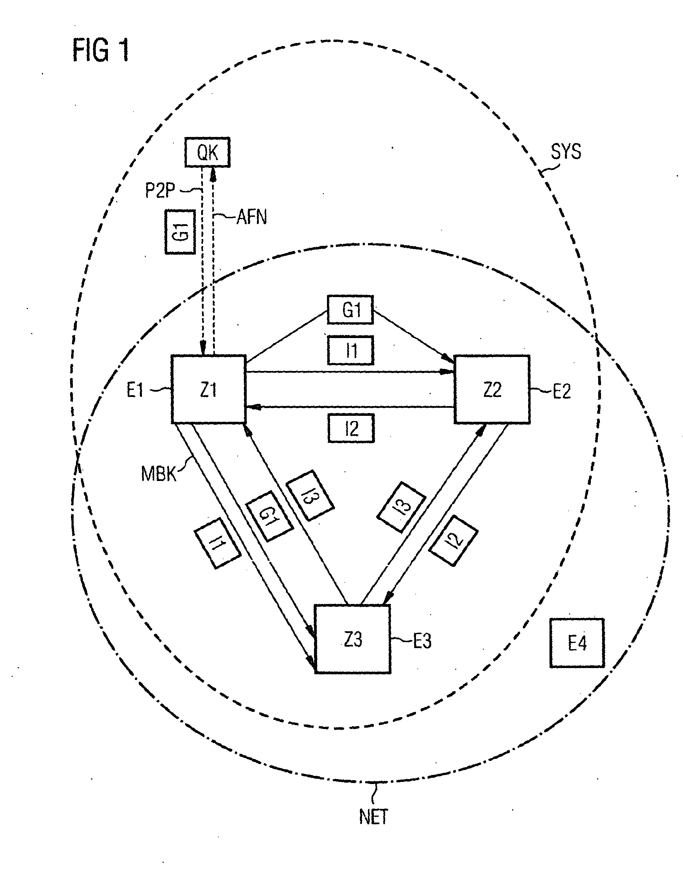

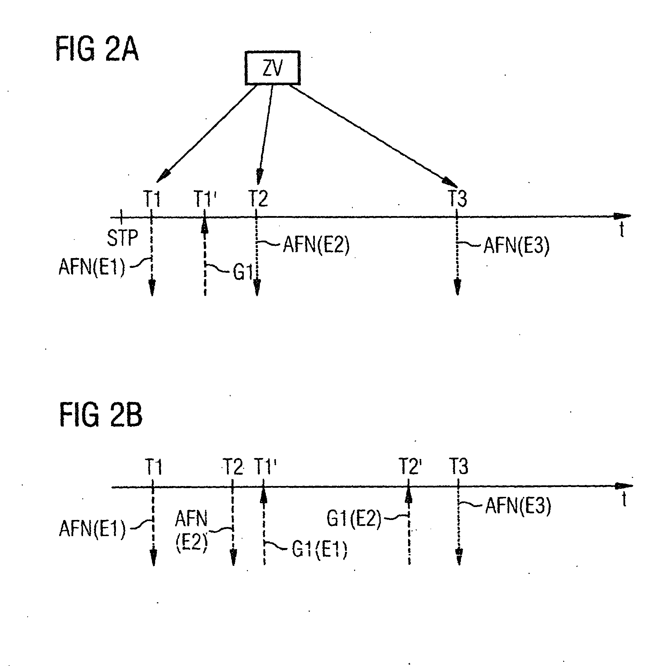

Elemente mit gleicher Funktion und Wirkungsweise sind in den Figuren 1 und 2a, 2b mit denselben Bezugszeichen versehen.

In Figur 1 ist ein Netzwerk NET mit vier Knoten E1, E2, E3, E4 und einem Quellknoten QK abgebildet, die untereinander über Datenkommunikationsverbindungen, wie beispielsweise LAN (LAN - Local Area Network), zum Austausch von Daten miteinander verbunden (diese Verbindungen sind in Figur 1 nicht dargestellt). In Figur 1 ist der Quellknoten QK zu sehen, der Datensegmente G1, G2, G3 zumindest eines Datenstroms D umfasst, wobei die Datensegmente zum Abruf für einen oder mehrere Knoten bereit gestellt sind. Die Knoten E1, E2, E3 möchten die Datensegmente des Datenstroms von dem Quellknoten abrufen und bilden hierzu eine Gruppe G. Zur Unterscheidung dieser Knoten von allen Knoten des Netzwerks, werden die Knoten E1, E2, E3 im weiteren als Nutzer E1, E2, E3 bezeichnet.

Der Datenstrom D liegt in Datensegmenten auf dem Quellknoten QK vor und kann von dort segmentweise abgerufen werden. Der Abruf der Segmente wird durch den jeweiligen Nutzer dadurch erreicht, dass zunächst eine Aufforderungsnachricht AFN in Form einer Punkt-zu-Punktverbindung P2P, d. h. über einen Punkt-zu-Punktübertragungskanal, an den Quellknoten geschickt wird, der nach Empfang der Aufforderungsnachricht eines der Datensegmente G1 des Datenstroms D über den Punkt-zu-Punktübertragungskanal an den anfragenden Nutzer schickt. Datensegmente und Nachrichten, die über den Punkt-zu-Punktübertragungskanal verschickt werden, sind in Figur 1 mit gestrichelten Linien gekennzeichnet.

Bevor die Aufforderungsnachricht AFN von einem der Nutzer E1, E2, E3 abgeschickt wird, versenden diese Nutzer jeweils zu den anderen Nutzern der Gruppe G ihre Statusnachricht I1. So übermittelt der Nutzer E1 seine Statusnachricht I1 an die Nutzer E2, E3, der Nutzer E2 seine Statusnachricht I2 an die Nutzer E1, E3 und der Nutzer E3 seine Statusnachricht I3 an die Nutzer E1, E2. Die jeweilige Statusnachricht zeigt an, dass der jeweilige Nutzer den Datenstrom D bzw. die dazugehörigen Datensegmente empfangen möchte. Nach Empfang der Statusnachrichten sind die Nutzer E1, E2, E3 im Bilde, welche der anderen Knoten bzw. Nutzer im Netzwerk NET aktuell den Empfang des Datenstroms bzw. der Datensegmente wünschen. Das Verschicken der Statusnachrichten geschieht über einen Multicast- und/ oder einen Broadcast-Kanal MBK.

Hierbei sei angemerkt, dass die Statusnachricht durch das Versenden über den Broadcast- und/oder Multicastkanal zunächst alle Knoten im Netzwerk erreicht. Nur diejenigen Knoten, die auch den Empfang wünschen, merken sich diese Statusinformation und sind somit einer der Nutzer in der Gruppe. Das bedeutet, dass die Gruppe dynamisch aufgebaut und veränderbar ist, da Nutzer der Gruppe diese verlassen und andere Knoten im Netzwerk der Gruppe durch Versenden ihre Statusnachricht und durch Empfangen der Statusnachricht des zumindest einen Nutzers der Gruppe hinzutreten können.

Als nächstes fragt der Nutzer E1 mit Hilfe der Aufforderungsnachricht AFN ein Datensegment G1 von dem Quellknoten QK an. Dieser Quellknoten übermittelt darauf das Datensegment G1. Nach Erhalt des Datensegments G1 wählt der Nutzer E1 diejenigen anderen Nutzer der Gruppe aus, die ihre Statusnachricht ihm übermittelt derart haben, dass sie den Empfang von Datensegmenten des Datenstroms wünschen. Hierdurch werden die Nutzer E2 und E3 ermittelt.

Im Folgenden überträgt der Nutzer E1 das Datensegment G1 an die ausgewählten Nutzer E2, E3 über den Multicast- und/ oder den Broadcast- Kanal MBK des Netzwerks NET. Daraufhin empfangen die Nutzer E2, E3 über den Multicast- und/ oder den Broadcast-Kanal das Datensegment G1.

Um zu verhindern, dass der Nutzer das Datensegment G1 sowohl direkt vom Quellknoten QK über den Punkt-zu-Punktübertragungskanal P2P als auch über den Multicast- und/oder Broadcast-Kanal MBK von einem anderen Nutzer erhält, prüft der jeweilige Nutzer vor dem Versenden der Aufforderungsnachricht, ob das benötigte Datensegment bereits über den Multicast- und/oder Broadcast-Kanal MBK empfangen worden ist. Ist dies der Fall wird keine Aufforderungsnachricht von dem Nutzer verschickt, ansonsten wird die Aufforderungsnachricht versendet. Hierdurch wird erreicht, dass ein Datenaufkommen innerhalb des Netzwerks reduziert wird, da das gewünschte Datensegment einmal über den Peer-zu-Peerübertragungskanal an einen der Nutzer der Gruppe übermittelt und durch diesen mit Hilfe des Multicast- und/oder Broadcast-Kanals des Netzwerks an die anderen Nutzer der Gruppe weitervermittelt wird. Damit wird eine Netzlast innerhalb des Netzwerks auf ein zweimaliges Übertragen des Datensegments beschränkt. Das Verfahren gemäß Figur 1 erlaubt, dass jeder Nutzer das Datensegment von dem Quellknoten erhält und an die anderen Nutzer der Gruppe weiterverteilt. Über der Zeit kann sich somit innerhalb des Netzwerks der für die Verteilung zuständige Nutzer ändern. Dadurch wird gewährleistet, dass zum einen eine sich selbst organisierende Verteilung des Datensegments des Datenstroms innerhalb des Netzwerks ermöglicht wird, die zum einen flexibel an dynamische Änderungen, wie zum Beispiel zur Gruppe hinzu oder austretende Nutzer, sich anpassen kann, als auch kostengünstig realisierbar ist, da keine zentrale Verwaltung notwendig ist. Zudem ist diese Vorgehensweise fehlerrobust, da ein fehlerhaft arbeitender Nutzer, z.B. ein ausgefallener Nutzer, die Verteilung der Datensegmente innerhalb der Gruppe nicht blockieren kann.

Das Verfahren kann dadurch erweitert werden, dass die Statusnachricht in vorgebaren Zeitintervallen Z1, Z2, Z3 von einem Nutzer an die anderen Nutzer oder Knoten im Netzwerk verteilt wird. So verschickt der Nutzer E1 seine Statusnachrichten im Zeitintervall Z1 und der Nutzer Z2 seine Statusnachrichten in dem ihm zugeordneten Zeitintervall Z2. Kürzere Zeitintervalle sind notwendig, falls eine hohe Dynamik innerhalb des Netzwerks vorliegt, bspw. durch Ein- bzw. Austreten von Nutzern in die Gruppe. Ist eine Zusammensetzung der Nutzer der Gruppe für längerer Zeit fix, so kann das jeweilige Zeitintervall größer gewählt werden, zum Beispiel Z1 = 4 Sekunden, Z2 = 8 Sekunden, Z3 = 30 Sekunden.

In einer alternativen Erweiterung der Erfindung kann das Verschicken der jeweiligen Aufforderungsnachricht AFN des jeweiligen Nutzers E1, E2, E3 aufgrund einer vorgebaren oder zufällig ermittelbaren Zeitverzögerung ZV gesteuert werden. Dies wird anhand von den Figuren 2a und 2b näher erläutert. Zur Reduktion des im Netzwerks NET benötigten Verkehrsaufkommen zum Verteilen des Datensegment G1 ist es wünschenswert, wenn lediglich einer der Nutzer der Gruppe über den Punkt-zu-Punktübertragungskanal das Datensegment erhält und er den anderen Nutzern der Gruppe mittels des Multicast- und/oder Broadcast-Kanals das empfangene Datensegment zusendet. Um dies zu erreichen wird der Zeitpunkt Tx, wie z.B. T1, T2 oder T3, an dem die Aufforderungsnachricht der jeweiligen Nutzer E1, E2, E3 verschickt wird mit Hilfe einer jeweiligen Zeitverzögerung ZV gesteuert. Die Zeitverzögerung ZV bestimmt daher zunächst den Zeitpunkt T1, T2, T3 an dem die Aufforderungsnachricht für den jeweiligen Nutzer abgeschickt werden soll, d. h. für den Nutzer E1 zum Zeitpunkt T1, den Nutzer E2 zum Zeitpunkt T2 und den Nutzer E3 zum Zeitpunkt T3. Im Beispiel gemäß Figur 2a ist T1 < T2 < T3, z.B. T1 = 15:00:00 Uhr, T2 = 15:00:15 Uhr und T3 = 15:01:11 Uhr.

Zunächst versendet der Nutzer E1 seine Aufforderungsnachricht AFN (E1) an den Quellknoten zum Zeitpunkt T1, wobei der Quellknoten das Datensegment G1 an den Nutzer E1 zu einem weiteren Zeitpunkt T1'=15:00:05 übermittelt. Nach Empfang des Datensegments überträgt der Nutzer E1 das empfangene Datensegments an die anderen Nutzer E2, E3 der Gruppe. Bevor nun die anderen Nutzer E2, E3 ihre Aufforderungsnachrichten AFN (E2) bzw. AFN (E3) absenden, überprüfen sie, ob sie bereits das gewünschte Datensegment erhalten haben. Da dies der Fall ist verzichten diese Nutzer E2, E3 auf das Verschicken ihrer Aufforderungsnachricht. In Figur 2a sind graphisch durch gepunktete Linien diejenigen Aufforderungsnachrichten gekennzeichnet, die nicht verschickt werden.

In Figur 2b werden analog zu den Ausführungen gemäß Figur 2a die Zeitpunkte T1, T2, T3 festgelegt. So schickt zunächst der Nutzer E1 seine Aufforderungsnachricht AFN(E1) an den Quellknoten. Da der Nutzer E2 zu seinem Zeitpunkt T2 nicht über das gewünschte Datensegment G1 verfügt, übermittelt er seine Aufforderungsnachricht AFN(E2) an den Quellknoten. Zeitlich daran anschließend empfängt der Nutzer E1 das Datensegment G1(E1) zum Zeitpunkt T1' und der Nutzer E2 das Datensegment G1(E2) zum Zeitpunkt T2' (Die Klammern in den Bezugszeichen der Figuren 2a und 2b sind lediglich als Hinweis zu verstehen, an wen bzw. von wem eine Nachricht geschickt bzw. ein Datensegment empfangen wird).

Nach Empfang des Datensegments durch den Nutzer E1, überprüft dieser, ob das Datensegment G1 mittels des Multicast- und/oder Broadcast-Kanals empfangen worden ist. Da das nicht der Fall ist überträgt der Nutzer E1 an die anderen Nutzer E2, E3 der Gruppe G das Datensegment via des Multicast- und/oder Broadcast-Kanals. Ferner überprüft der Nutzer E2 nach Erhalt das Datensegments über den Punkt-zu-Punktübertragungskanal, d.h. direkt von dem Quellknoten QK, ob das Datensegment bereits über den Multicast- und/oder Broadcast-Kanal empfangen worden ist. Da dies der Fall ist versendet der Nutzer E2 das Datensegment nicht mehr über den Multicast- und/oder Broadcast-Kanal.

Die Erfindung kann durch die Nutzer E1, E2, E3 der Gruppe in dem Netzwerk NET durchgeführt werden, wobei die Mittel des Nutzer und/oder Quellknotens durch Software und/ oder Hardware implementiert und realisiert werden können. Die Nutzer sind beispielsweise in einer Rechnereinheit, wie einem PDA (PDA - Personal Digital Assistant) oder einem Mobilfunktelefon integriert. Die Endknoten verfügen dabei über folgende Mittel:
- Sendemittel zum Versenden einer Statusnachricht durch den zumindest einen Nutzer zu dem zumindest einen anderen Nutzer der Gruppe mittels eines Multicast- und/oder eines Broadcast-Kanals des Netzwerks, wobei diese Statusnachricht eine Information umfasst, die anzeigt, dass der sendende Nutzer zumindest ein zu empfangendes Datensegment des Datenstroms empfangen möchte, und zum Versenden des Datensegments an den zumindest einen ermittelten anderen Nutzer mittels des Multicast- und/oder des Broadcast-Kanals;
- Empfangsmittel zum Empfangen von zumindest einer weiteren Statusnachricht des zumindest einen anderen Nutzers der Gruppe durch den Nutzer über den Multicast- und/oder den Broadcast-Kanal, wobei diese Statusnachricht eine Information umfasst, die anzeigt, dass der sendende andere Nutzer zumindest ein zu empfangendes Datensegment des Datenstroms empfangen möchte und zum Empfangen des Datensegments durch den zumindest einen ermittelten anderen Nutzer über den Multicast- und/oder den Broadcast-Kanal;
- Auswahlmittel zum Ermitteln, ob zumindest einer der anderen Nutzer aufgrund seiner Statusnachricht dem Nutzer seinen Wunsch zum Empfangen des empfangenen Datensegments angezeigt hat.

Zudem kann der Nutzer ein weiteres Mittel umfassen, mit dem Erweiterungen des Verfahrens durchführbar sind.

Ferner kann die Gruppe von Nutzern und der Quellknoten in Form eines Systems zusammengefasst sein, wobei Quellknoten über ein Quellmittel verfügt, das derart ausgestaltet ist, dass es mit den jeweiligen Mitteln des zumindest einen Nutzers das Verfahren zum Verteilen sowie dessen Erweiterungen ausführt.

### Literaturverzeichnis

[1] RFC 1889, "RTP - A Transport Protocol for Real-Time Applications", Internet Engineering Task Force (IETF), http://www.ietf.org

## Patentansprüche

1. Verfahren zum Verteilen zumindest eines Datensegments (G1) zumindest eines Datenstroms (D) an eine Gruppe (G) mit mehreren Nutzern (E1,..., E3) in einem Netzwerk (NET),
mit folgenden Schritten:
- Versenden einer Statusnachricht (I1) durch einen Nutzer (E1) der Gruppe zu dem zumindest einen anderen Nutzer (E2, E3) der Gruppe (G) mittels eines Multicast- und/oder eines Broadcast-Kanals (MBK) des Netzwerks (NET), wobei diese Statusnachricht (I1) eine Information umfasst, die anzeigt, dass der sendende Nutzer (E1) zumindest ein zu empfangendes Datensegment (G1) des Datenstroms (D) empfangen möchte;
- Empfangen von zumindest einer weiteren Statusnachricht (I2, I3) des zumindest einen anderen Nutzers (E2, E3) der Gruppe (G) durch den Nutzer (E1) über den Multicast- und/oder den Broadcast-Kanal (MBK), wobei diese Statusnachricht (I2, I3) eine Information umfasst, die anzeigt, dass der andere Nutzer (E2, E3) zumindest ein zu empfangendes Datensegment (G1) des Datenstroms (D) empfangen möchte;
- Empfangen des Datensegments (G1) durch den Nutzer (E1) über einen Punkt-zu-Punkt Übertragungskanal (P2P) von einem Quellknoten (QK);
- Ermitteln durch den Nutzer (E1), ob zumindest einer der anderen Nutzers (E2, E3) aufgrund seiner Statusnachricht (I2, I3) dem Nutzer seinen Wunsch zum Empfangen des empfangenen Datensegments (G1) angezeigt hat;
- Versenden des Datensegments (G1) an den zumindest einen ermittelten anderen Nutzer (E2, E3) mittels des Multicast- und/oder des Broadcast-Kanals (MBK);
- Empfangen des Datensegments (G1) durch den zumindest einen ermittelten anderen Nutzer (E2, E3) über den Multicast- und/oder den Broadcast-Kanal (MBK).

2. Verfahren nach Anspruch 1,
**dadurch gekennzeichnet, dass**
der Nutzer (E1, E2, E3) vor einem Verschicken einer Aufforderungsnachricht (AFN) an den Quellknoten (QK) zum Übersenden des Datensegments (G1) ein Vorhandensein des Datensegments (G1) aufgrund eines Empfangs über den Multicast- und/oder den Broadcast-Kanal (MBK) überprüft,
die Aufforderungsnachricht (AFN) nur verschickt wird, falls die Überprüfung das Datensegment (G1) als fehlend identifiziert.

3. Verfahren nach dem Anspruch 2,
**dadurch gekennzeichnet, dass**
die jeweilige Aufforderungsnachricht (AFN) für den jeweiligen Nutzer (E1, E2) aufgrund einer vorgebbaren oder zufällig ermittelbaren Zeitverzögerung (ZV), insbesondere ausgehend von einem vorgebbaren Startzeitpunkt (STP), verschickt wird.

4. Verfahren nach einem der vorhergehenden Ansprüche,
**dadurch gekennzeichnet, dass**
eine Übertragung eines über den Punkt-zu-Punkt Übertragungskanal (P2P) empfangenen Datensegments (G1) mittels des Multicast- und/oder den Broadcast-Kanals (MBK) unterbunden wird, falls das empfangene Datensegment (G1) auch über den Multicast- und/oder den Broadcast-Kanal (MBK) empfangen wurde.

5. Verfahren nach einem der vorhergehenden Ansprüche,
**dadurch gekennzeichnet, dass**
das Versenden der Statusnachricht (I1) durch den jeweiligen Nutzer (E1) zu dem zumindest einen der anderen Nutzer (E2, E3) mittels des Multicast- und/oder des Broadcast-Kanals in für die Nutzer (E1, E2, E3) jeweils vorgebbare Zeitintervalle (Z1, Z2, Z3) durchgeführt wird.
ein zu empfangendes Datensegment (G1) eines Datenstroms (D) empfangen möchte, und zum Versenden des Datensegments (G1) an den zumindest einen ermittelten anderen Nutzer (E2, E3) mittels des Multicast- und/oder des Broadcast-Kanals (MBK);
- Empfangsmittel (EM) zum Empfangen von zumindest einer weiteren Statusnachricht (I2, I3) des zumindest einen anderen Nutzers (E2, E3) der Gruppe (G) durch den Nutzer (E1) über den Multicast- und/oder den Broadcast-Kanal (MBK), wobei diese Statusnachricht (I2, I3) eine Information umfasst, die anzeigt, dass der andere Nutzer (E2, E3) zumindest ein zu empfangendes Datensegment (G1) des Datenstroms (D) empfangen möchte und zum Empfangen des Datensegments (G1) durch den zumindest einen ermittelten anderen Nutzer (E2, E3) über den Multicast- und/oder den Broadcast-Kanal (MBK);
- Auswahlmittel (AM) zum Ermitteln, ob zumindest einer der anderen Nutzer (E2, E3) aufgrund seiner Statusnachricht (I2, I3) dem Nutzer (E1) seinen Wunsch zum Empfangen des Datensegments (G1) angezeigt hat.

6. Nutzer (E1, E2, E3) in einem Netzwerk (NET),
**dadurch gekennzeichnet, dass**
der Nutzer folgende Mittel umfasst:
- Sendemittel (SM) zum Versenden einer Statusnachricht (I1) durch den zumindest einen Nutzer (E1) zu dem zumindest einen anderen Nutzer (E2, E3) der Gruppe (G) mittels eines Multicast- und/oder eines Broadcast-Kanals (MBK) des Netzwerks (NET), wobei diese Statusnachricht (I1) eine Information umfasst, die anzeigt, dass der sendende Nutzer (E1) zumindest

7. Nutzer nach Anspruch 6,
**gekennzeichnet dadurch, dass**
der Nutzer ein weiteres Mittel (WM) umfasst, das derart ausgestaltet ist, dass es zumindest einer der Schritte der Ansprüche 2 bis 5 durchführt.

8. System (SYS) mit einer Gruppe (G) von Nutzer (E1, E2, E3) und mit einem Quellknoten(QK), wobei der jeweilige Nutzer (E1, E2, E3) gemäß dem Anspruch 6 oder 7 ausgestaltet ist,
**dadurch gekennzeichnet, dass**
der Quellknoten (QK) ein Quellmittel (QM) umfasst, das derart ausgestaltet ist, dass es mit den jeweiligen Mitteln (SM, EM, AM) des einen Nutzers (E1, E2, E3) das Verfahren gemäß einem der Ansprüche 1 bis 5 ausführt.

## Claims

1. Method for distributing at least one data segment (G1) of at least one data stream (D) to a group (G) comprising a plurality of users (E1,..., E3) in a network (NET),
said method having the following steps:
- sending a status message (I1) by one user (E1) of the group to the at least one other user (E2, E3) of the group (G) by means of a multicast and/or broadcast channel (MBK) of the network (NET), with said status message (I1) including information which indicates that the sending user (E1) wishes to receive at least one data segment (G1) that is to be received belonging to the data stream (D);
- receiving at least one further status message (I2, I3) of the at least one other user (E2, E3) of the group (G) by the user (E1) via the multicast and/or broadcast channel (MBK), with said status message (I2, I3) including information which indicates that the other user (E2, E3) wishes to receive at least one data segment (G1) that is to be received belonging to the data stream (D);
- receiving the data segment (G1) by the user (E1) via a point-to-point transmission channel (P2P) from a source node (QK) ;
- determining by the user (E1) whether, based on its status message (I2, I3), at least one of the other users (E2, E3) has indicated to the user its wish to receive the received data segment (G1);
- sending the data segment (G1) to the at least one identified other user (E2, E3) by means of the multicast and/or broadcast channel (MBK);
- receiving the data segment (G1) by the at least one identified other user (E2, E3) via the multicast and/or broadcast channel (MBK).

2. Method according to claim 1,
**characterised in that**
before sending a request message (AFN) to the source node (QK) for the data segment (G1) to be transmitted, the user (E1, E2, E3) checks whether the data segment (G1) is present as a result of having been received via the multicast and/or broadcast channel (MBK),
the request message (AFN) is only sent if the check identifies the data segment (G1) as missing.

3. Method according to claim 2,
**characterised in that**
the respective request message (AFN) for the respective user (E1, E2) is sent based on a predefinable or randomly determinable time delay (ZV), in particular starting from a predefinable start time (STP).

4. Method according to one of the preceding claims,
**characterised in that**
a transmission of a data segment (G1) received via the point-to-point transmission channel (P2P) by means of the multicast and/or broadcast channel (MBK) is prevented if the received data segment (G1) has also been received via the multicast and/or broadcast channel (MBK).

5. Method according to one of the preceding claims,
**characterised in that**
the status message (I1) is sent by the respective user (E1) to at least one of the other users (E2, E3) by means of the multicast and/or broadcast channel at time intervals (Z1, Z2, Z3) which can be predefined individually for the users (E1, E2, E3).

6. User (E1, E2, E3) in a network (NET),
**characterised in that**
the user comprises the following means:
- sending means (SM) for sending a status message (I1) by the at least one user (E1) to the at least one other user (E2, E3) of the group (G) by means of a multicast and/or broadcast channel (MBK) of the network (NET), with said status message (I1) including information which indicates that the sending user (E1) wishes to receive at least one data segment (G1) that is to be received belonging to a data stream (D), and for sending the data segment (G1) to the at least one identified other user (E2, E3) by means of the multicast and/or broadcast channel (MBK);
- receiving means (EM) for receiving at least one further status message (I2, I3) of the at least one other user (E2, E3) of the group (G) by the user (E1) via the multicast and/or broadcast channel (MBK), with said status message (I2, I3) including information which indicates that the other user (E2, E3) wishes to receive at least one data segment (G1) that is to be received belonging to the data stream (D), and for receiving the data segment (G1) by the at least one identified other user (E2, E3) via the multicast and/or broadcast channel (MBK);
- selection means (AM) for determining whether, based on its status message (I2, I3), at least one of the other users (E2, E3) has indicated to the user (E1) its wish to receive the data segment (G1).

7. User according to claim 6,
**characterised in that**
the user includes a further means (WM) which is embodied in such a way that it performs at least one of the steps of claims 2 to 5.

8. System (SYS) comprising a group (G) of users (E1, E2, E3) and having a source node (QK), wherein the respective user (E1, E2, E3) is embodied according to claim 6 or 7, **characterised in that**
the source node (QK) includes a source means (QM) which is embodied in such a way that it performs the method according to one of claims 1 to 5 with the aid of the respective means (SM, EM, AM) of the one user (E1, E2, E3).

## Revendications

1. Procédé pour distribuer au moins un segment de données (G1) d'au moins un flux de données (D) à un groupe (G) de plusieurs usagers (E1, ..., E3) dans un réseau (NET), comportant les étapes suivantes :
- envoi d'un message d'état (I1) par un usager (E1) du groupe à l'au moins un autre usager (E2, E3) du groupe (G) au moyen d'un canal multicast et/ou d'un canal broadcast (MBK) du réseau (NET), ce message d'état (I1) incluant une information qui indique que l'usager émetteur (E1) souhaite recevoir au moins un segment de données à recevoir (G1) du flux de données (D) ;
- réception d'au moins un autre message d'état (I1, I3) de l'au moins un autre usager (E2, E3) du groupe (G) par l'usager (E1) via le canal multicast et/ou le canal broadcast (MBK), ce message d'état (I2, I3) incluant une information qui indique que l'autre usager (E2, E3) souhaite recevoir au moins un segment de données à recevoir (G1) du flux de données (D) ;
- réception du segment de données (G1) par l'usager (E1) à partir d'un noeud source (QK) via un canal de transmission de point à point (P2P) ;
- détermination par l'usager (E1), si au moins l'un des autres usagers (E2, E3) a, sur la base de son message d'état (I2, I3), signalé à l'usager (E1) sa demande de réception du segment de données (G1).
- envoi du segment de données (G1) à l'au moins un autre usager déterminé (E2, E3) au moyen du canal multicast et/ou du canal broadcast (MBK) ;
- réception du segment de données (G1) par l'au moins un autre usager déterminé (E2, E3) via le canal multicast et/ou le canal broadcast (MBK).

2. Procédé selon la revendication 1, **caractérisé en ce que** l'usager (E1, E2, E3), avant d'envoyer au noeud source (QK) un message (AFN) d'invitation à transmettre le segment de données (G1), vérifie une présence du segment de données (G1) sur la base d'une réception via le canal multicast et/ou le canal broadcast (MBK),
le message d'invitation (AFN) n'est envoyé que si la vérification identifie le segment de données (G1) comme absent.

3. Procédé selon l'une des revendications précédentes, **caractérisé en ce qu'**une transmission d'un segment de données (G1) reçu via le canal de transmission de point à point (P2P) est empêchée au moyen du canal multicast et/ou du canal broadcast (MBK) si le segment de données reçu (G1) a également été reçu via le canal multicast et/ou le canal broadcast (MBK).

4. Procédé selon l'une des revendications précédentes, **caractérisé en ce que** l'envoi du message d'état (I1) par l'usager respectif (E1) à l'au moins un des autres usagers (E2, E3) est effectué au moyen du canal multicast et/ou du canal broadcast dans des intervalles de temps (Z1, Z2, Z3) respectivement prédéterminables pour les usagers (E1, E2, E3).

5. Procédé selon la revendication 2, **caractérisé en ce que** le message d'invitation respectif (AFN) est envoyé, pour l'usager respectif (E1, E2), sur base d'une temporisation (ZV) prédéterminable ou déterminable aléatoirement, notamment à partir d'un instant de départ prédéterminable (STP).

6. Usager (E1, E2, E3) dans un réseau (NET), **caractérisé en ce que** l'usager comprend les moyens suivants :
- des moyens d'émission (SM) pour l'envoi d'un message d'état (I1) par l'au moins un usager (E1) à l'au moins un autre usager (E2, E3) du groupe (G) au moyen d'un canal multicast et/ou broadcast (MBK) du réseau (NET), ce message d'état (I1) comprenant une information qui indique que l'usager émetteur (E1) souhaite recevoir au moins un segment de données à recevoir (G1) d'un flux de données (D), et pour l'envoi du segment de données (G1) à l'au moins un autre usager déterminé (E2, E3), au moyen du canal multicast et/ou broadcast (MBK) ;
- des moyens de réception (EM) pour la réception d'au moins un autre message d'état (I2, I3) de l'au moins un autre usager (E2, E3) du groupe (G) par l'usager (E1) via le canal multicast et/ou le canal broadcast (MBK), ce message d'état (I2, I3) comprenant une information qui indique que l'autre usager (E2, E3) souhaite recevoir au moins un segment de données à recevoir (G1) du flux de données (D), et pour la réception du segment de données (G1) par l'au moins un autre usager déterminé (E2, E3) via le canal multicast et/ou le canal broadcast (MBK) ;
- des moyens de sélection (AM) pour déterminer si au moins l'un des autres usagers (E2, E3) a, sur la base de son message d'état (I2, I3), signalé à l'usager (E1) sa demande de réception du segment de données (G1).

7. Usager selon la revendication 6, **caractérisé en ce que** l'usager comprend un autre moyen (WM) qui est réalisé de manière à exécuter au moins l'une des étapes des revendications 2 à 5.

8. Système (SYS) avec un groupe (G) d'usagers (E1, E2, E3) et un noeud source (QK), l'usager respectif (E1, E2, E3) étant réalisé selon la revendication 6 ou 7, **caractérisé en ce que** le noeud source (QK) comprend un moyen source (QM) qui est réalisé de manière à exécuter le procédé selon l'une des revendications 1 à 5 avec les moyens respectifs (SM, EM, AM) de l'usager (E1, E2, E3).
